# EUROPEAN PATENT APPLICATION

(11) **EP 3 078 277 A1**
(43) Date of publication of application: **12.10.2016**
(21) Application number: 15158882.9
(22) Date of filing: 12.03.2015
(51) Int. Cl.: A23L 3/40, A23L 3/48, A23J 1/04, A21D 2/34

(54) **Method for the manufacture of insect powder**

(71) Applicant: Krauß, Stefan, 24613 Aukrug (DE)
(72) Inventor: Krauss, Stefan, 24613 Aukrug (DE); Tempel, Annika, 24613 Aukrug (DE)
(74) Representative: Uexküll & Stolberg

(57) **Abstract**

The present invention relates to a method for the manufacture of insect powder, comprising drying insects with air having a temperature of from 100°C to 180°C; and grinding the insects to a powder; wherein the powder has a water activity of less than 0.7. Further, the invention also pertains to insect powder having a water activity of less than 0.7. The invention also relates to uses of said powder and foodstuff comprising the insect powder.

## Description

### SUMMARY OF THE INVENTION

The present invention relates to a method for the manufacture of insect powder, comprising drying insects with air having a temperature of from 100°C to 180°C; and grinding the insects to a powder; wherein the powder has a water activity of less than 0.7. Further, the invention also pertains to insect powder having a water activity of less than 0.7. The invention also relates to uses of said powder and foodstuff comprising the insect powder.

### TECHNICAL BACKGROUND

In recent years, population growth, urbanization and the growing middle class have increased the global demand for food, in particular of sources providing valuable animal protein. In 2030, around 9 billion people will need to be fed worldwide. It is presently expected that this demand cannot be met by traditional livestock farming. Intensive livestock farming is further associated with environmental problems including overgrazing as well as pollution of soil and water. Overgrazing is a cause of deforestation. As a consequence, intensive livestock production contributes to climate change.

At the same time it is likely that the increase in nutrient needs of the growing world population cannot be met by a purely vegetarian died, due to a difference in nutrient composition between meat- and plant-based diets.

A solution for this problem could be provided by entomophagy, i.e. human consumption of insects as food. Entomophagy is already practiced worldwide in many countries, in particular in Asia, Africa, and Latin America. Insects are ubiquitous, quickly reproducing and have high growth and feed conversion rates. Additionally, they have a low ecological footprint over their entire life cycle. Moreover, insects are nutritious with high contents of protein, fat and vital minerals. The use of insects as food and feed has many environmental, health and social advantages.

The environmental advantages of entomophagy include a good feed conversion efficiency which can be attributed *inter alia* to the fact that insects are cold-blooded animals. The conversion rate can be expressed as the amount of feed that is required for 1 kg weight gain. On average, insects are able to convert 2 kg feed into 1 kg insect mass. In comparison, cattle generally require 8 kg feed to produce 1 kg body mass. Moreover, insects produce less greenhouse gas emissions than conventional livestock. For example, pigs are known to produce 10 to 100 times the amount of greenhouse gas emissions per kg body weight than mealworms. Insects also have a considerably lower demand for water than conventional livestock. Therefore, insects, such as mealworms, show usually a better drought tolerance than e.g. cattle. Finally, insect production also needs less space, in particular no pasture land, than conventional livestock production.

Even though the nutritional content differs between insect species, developmental stage, habitat and diet, it is generally accepted that insects comprise protein and nutrients of high quality in comparison with meat and fish. Insects are particularly important as a food supplement for undernourished children because most insect species are rich in unsaturated fatty acids, such as those found in fish. Insects are further rich in dietary fibers and micronutrients, such as copper, iron, magnesium, manganese, phosphorous, selenium and zinc. Moreover, the risk for a transmission of zoonotic diseases, i.e. diseases that can be transferred from animal to human such as bird flu and mad cow disease, is much lower in insect-comprising food than in conventional meat-based foodstuff.

Further to these environmental and health advantages, the consumption of insects may have a social benefit because the collection and breeding of insects can be an important contribution to the subsistence in poor societies. Insects can be easily collected in the wild. Additionally, only minimal technical and financial means are required for breeding and harvest. Consequently, insects can be collected, cultured, processed and sold by the poorest in society. These activities can improve the diet and ensure a financial income when the excess production is sold. Thus, the insect breeding and harvest can also create new business opportunities in developing and emerging countries. This is further supported by the fact that the processing of insects into food and feed products is relatively easy. For example, insects can be processed into pastes or ground into flour.

In spite of the advantages of entomophagy described above, a significant hurdle to the introduction of insects as food products on western markets remains the disapproval of potential consumers. Nevertheless, history shows that nutrition patterns can change quickly, in particular in a globalised world. One example is the quick market acceptance of raw fish consummation in Sushi. The acceptance of entomophagy should therefore be encouraged where possible. Notably, even on markets in which entomophagy has long been part of the food culture, the influence of western nutrition can lead people to disrespect eating of insects. Nevertheless, the trade with insects is still flourishing in cities such as Bangkok and Kin-shasa due to a high demand of urban consumers. In these cultural environments, the edible insects often elicit feelings of nostalgia. Additionally, insects are often regarded as mere snacks.

There is therefore a need in the art for high quality food preparations which contain insects and do not provoke disapproval in the customer.

A solution suggested by the prior art is grinding of insects into a powder that can be used as a supplement for customary flour in various food and feed products. For example, insect flour prepared from crickets or other insects can be obtained from a number of specialized manufacturers as a human food supplement. Additionally, first trials have been made to use insect flour prepared e.g. from *Hermetia* larvae as a feed supplement during the cultivation of fish and broilers.

However, as the water and fat content of the insects is high, long term storage of these insect flour preparations is difficult. The high water content provides ideal growth conditions for molds and the like and increases the tendency of the powder to clump, which in turn can decrease the shelf life of the product. Additionally, due to relatively high water content, the prior art insect flour is not sufficiently similar to conventional flour, e.g. it has a lower bonding ability.

Decreasing the water content has been attempted in the art by pressing and freeze drying. These techniques, however, appear to have the disadvantage that the resulting product can easily be colonized by bacteria, germs and fungi. Fungal spores are not eliminated during the pressing or freeze drying. Attempts of the prior art to dry insects with hot air or by roasting were unable to reduce the water content sufficiently. Moreover, freeze drying poses the special disadvantage that the taste of the flour is negatively affected. The taste of freeze dried insect flour can best be described as tasting dusty. The taste and shelf life of the flour may also be negatively influenced by bacteria, germ or fungus contamination. Such contamination should be avoided because some these microorganisms are producers of harmful substances, such as toxins.

Further, conventional insect flour is high in fats and, consequently, can become rancid over time, thus potentially leading to a product with unpleasant taste and smell and to a reduced shelf life.

Decreasing the fat content in insect flour has been attempted in the art by mechanical pressing of the insects before grinding. This technique, however, does not aid in the removal of bacteria, germs or fungi. Moreover, it is thought that nutrients may be entrapped in chitin structures during this procedure rendering said nutrients indigestible. Finally, mechanical pressing does not reduce the fat content in insects to an extend that is sufficient to avoid rancidity during storage.

There is, thus, still a need in the art for a high quality insect powder with increased shelf life that can be consumed by humans and retains the good taste and odor over a long storage time.

### DESCRIPTION OF THE INVENTION

In the context of the invention it has surprisingly been found that such a high quality insect flour can be produced by drying the insects with air having a temperature of from 100°C to 180°C to an a_{w} value of below 0.7. Preferably, drying is with air having a temperature of from 135°C to 160°C. The insect flour thus produced has a residual moisture content of below 20%. Drying can further be accelerated by removal of evaporated moisture from the drying chamber during the drying process. Drying with air having a temperature of from 100°C to 180°C has the further advantage that contaminating microorganisms will efficiently be killed.

Moreover, it has been found that an excellent taste and odor can be retained during long term storage when the fat content in the insects is reduced to less than 5%, preferably to less than 2%.

The insect powder of the invention is visually appealing for the consumer and well suited to decrease any scruples a consumer might have to consume insects. Advantageously, the insect powder also has a particularly good taste. In particular, the powder has a nutty and roasted flavor. The further addition of additives or spices can, thus, be avoided. In particular, it was found that the insect powder is well suited to at least partially replace traditional flour and/or coarse meal in the manufacture of baked goods, such as bread, noodles, cake, pastries and the like.

Thus, the invention provides in a first aspect a method for the manufacture of insect powder, comprising a) drying insects with air having a temperature of from 100°C to 180°C; and b) grinding the insects to a powder; wherein the powder has a water activity of less than 0.7. The powder has a residual moisture content of less than 20%. In a preferred embodiment, the method comprises a further step c) wherein the fat content of the insect powder is reduced to less than 5%, more preferably to less than 2%.

In a second aspect, the invention provides an insect powder having a water activity of less than 0.7. The insect powder has a residual moisture content of less than 20%. Preferably, the insect powder additionally has a fat content of less than 5%, more preferably of less than 2%.

In a related aspect, the invention provides an insect powder obtainable according to a method of the invention.

In a further aspect, the invention provides for the use of an insect powder according to the invention for the production of food. In a preferred use, the insect powder is mixed with flour and/or coarse meal obtainable from grain and/or plant seeds in the production of the food.

In another aspect, the invention relates to a foodstuff comprising an insect powder according to the invention.

As used herein, the term "insect powder" refers to a powder comprising or consisting of insects. In a preferred embodiment, insect powder is a powder consisting of insects. Further properties of the insect powder are described elsewhere herein.

The method for the manufacture of insect powder comprises a step a) of drying insects. Methods for drying insect are known in the art. For example, drying can be drying with hot air (i.e. convective or direct drying), drying by roasting, and the like. It has been found in the context of the invention that drying with hot air is particularly advantageous with regard to the taste and shelf life of the resulting insect powder as well as with regard to the energy-efficiency of the drying proves. Thus, drying in step a) is drying with hot air. "Hot" air as used herein can be air having temperature of from 100°C to 180°C. Thus, in other words, drying in step a) is preferably drying with air having a temperature of from 100°C to 180°C.

This means that the insects are contacted with hot air, e.g. by blowing the hot air over the surface of the insects. The hot air is able to efficiently take up large amounts of moisture evaporating from the insects. In other words, drying in step a) is convective drying.

Suitable methods and apparatuses for drying with hot air are known in the art. For example, drying can be in a hot air fryer, such as the Tefal Actifry (Tefal, Groupe SEB), or in a hot air oven, such as the Clima Plus Combi (Rational AG). In a preferred embodiment, drying is in a hot air oven. The skilled person will be able to identify further suitable apparatuses for drying with hot air.

To allow a particularly good flow of the hot air through the insect sample, the hot air should be able to flow through the pile or layers of insects that are dried. Drying in step a) is, thus, preferably drying with a hot air stream. This means that one preferred embodiment of the invention is a method for the manufacture of insect powder, comprising a) drying insects with a stream of air having a temperature of from 100°C to 180°C; and b) grinding the insects into a powder; wherein the powder has a water activity of less than 0.7. In a further preferred embodiment, a method for the manufacture of insect powder is provided, comprising a) drying insects with a stream of air having a temperature of from 135°C to 160°C; and b) grinding the insects into a powder; wherein the powder has a water activity of 0.6 or less. Drying with a hot air stream can be achieved with a hot air fan or blower. The hot air fan or blower can be combined e.g. with a perforated drying chamber as described below.

Moreover, during the drying the insects are preferably contacted with the hot air from more than one side. This can be achieved e.g. by placing the insects on a surface that comprises holes through which the hot air flows. Therefore, in a preferred embodiment, the drying in step a) is in a drying chamber that comprises multiple holes (i.e. is perforated) and the hot air is allowed to flow through said holes. The holes are smaller than the insects to be dried, thus, ensuring that the insects do not fall through the holes into the drying apparatus. A suitable drying chamber for drying with hot air is, e.g., a perforated drying chamber, such as a perforated Gastronorm container (i.e. a perforated container that is in accordance with the European standard EN 631). The person skilled in the art is able to identify further suitable drying chambers.

Preferably, the water vapor is removed from the vicinity of the insects during drying. Thereby, the air humidity around the insects can be lowered and the efficiency of drying increased. Thus, in a preferred embodiment, drying in step a) is in a drying chamber and evaporated moisture is removed from the drying chamber at least once during step a). This means that evaporated moisture can be removed 1x, 2x, 3x, 4x, 5x, or more often during step a). In a related embodiment, drying in step a) is in a drying chamber and evaporated moisture is removed continuously from the drying chamber during step a). In other words, evaporated moisture may be removed at least once, repetitively or continuously from the drying chamber during step a).

A simple means to remove evaporated moisture from the drying chamber is opening of the drying chamber and allowing an exchange of the humid air from the inside of the drying chamber with drier room air. Accordingly, in one embodiment, the drying chamber is opened at least once during step a) whereby contact between the drying chamber and an environment with drier air is facilitated. The air comprising the evaporated moisture is replaced by dry air in the drying chamber. Further methods for the removal of humid air are known in the art. For example, humid air may also be sucked off from the drying chamber and be replaced by drier air.

The air used for drying step a) of the method of the invention may have a temperature of from 120°C to 180°C, preferably from 130°C to 170°C, more preferably of from 135°C to 160°C, most preferably from 140°C to 160°C. In a particularly preferred embodiment, the air has a temperature of from 135°C to 160°C. Thus, in one preferred embodiment, the method for the manufacture of insect powder comprises a) drying insects with air having a temperature of from 135°C to 160°C; and b) grinding the insects to a powder; wherein the powder has a water activity of less than 0.7. In most preferred embodiment, the air in step a) has a temperature of from 140°C to 160°C. For example, the hot air can have a temperature of about 120°C, 130°C, 140°C, 150°C, 160°C, 170°C, or 180°C. In a preferred embodiment, the hot air has a temperature of about 150°C. These temperatures ensure that most germs, such as bacteria and fungi, are efficiently killed off. At the same time, it has been found that drying times at these temperatures can be relatively short (i.e. usually in the range of tens of minutes), thus, saving time and energy. It has also surprisingly been found that the indicated temperatures ensure that the insect powder is not burned during the procedure and that valuable (protein) components are not destroyed.

The duration of the drying procedure is dependent on the amount of insects that are dried at the same time and on the temperature used. The skilled person is able to determine a maximal amount of insects that can be dried at the same time. The air should be able to diffuse through the layers of insects that are stacked on top of each other and reach also the insects that are on the inside of an insect pile. In a particularly preferred embodiment, insects are comprised in a pile that is not higher than about 20 insect layers during drying in step a). In a most preferred embodiment, insects are comprised in a pile that is not higher than about 10 insect layers during drying in step a). In further preferred embodiments, the insects are comprised in a pile that comprises from about 1 to about 20, from about 1 to about 15, from about 1 to about 10, from about 1 to about 9, from about 1 to about 8, from about 1 to about 7, from about 1 to about 6, from about 1 to about 5, from about 1 to about 4 layers of insects. It will be understood that the term "layer" as used herein does not necessarily refer to a continuous ordered layer of insects, but to the average number of insects that are piled (in a non-ordered fashion) on top of each other.

Drying at the above indicated temperatures may be e.g. be for a time of from 1 to 60 min, preferably from 5 to 30 min, more preferably from 8 to 20 min. Drying for these times may be continuous or discontinuous. For example, drying may be discontinuous and interrupted for several minutes (such as e.g. for 1 to 5 min) to allow evaporation of water by opening of the drying chamber. The skilled person is able to determine whether such an evaporation step should be included in the method of the invention. For example, it can be advantageous to interrupt drying to allow evaporation of water in case the humidity inside the drying apparatus is very high as described elsewhere herein. Thereby the drying process is sped up.

In a particularly preferred embodiment the method for the manufacture of insect powder comprises a) drying insects with air having a temperature of from 135°C to 160°C for a time of from 1 min to 60 min; and grinding the insects into a powder; wherein the powder has a water activity of less than 0.7. Particularly preferred is drying in step a) in a hot air oven at a temperature of from 135°C to 160°C for a time of from 1 to 60 min.

The a_{w} value (also known as the "water activity") is a measure for freely available water in a substance and an important indicator for the shelf life of food products. For example, mold growth is considerably reduced at a low water activity. Most microorganisms have a growth optimum at an a_{w} value of from 0.98 to 1. The a_{w} value is p (vapor pressure of water in the substance) / p₀ (vapor pressure of pure water at the same temperature).

Methods for the measurement of the water activity are well known in the art. For example, the water activity can be measured with a resistive electrolytic, a capacitance or a dew point hygrometer. A dew point hygrometer that is suitable for measuring the water activity is e.g. the AcquaLab *CX-3TE* (Dec-agon Devices, Inc.) the use of which is described elsewhere herein.

The insect powder according to the invention has a water activity of less than 0.7, preferably 0.65 or less, more preferably 0.6 or less. Thus, a water activity of 0.6 or less is particularly preferred for the insect powder of the invention. Accordingly, in a preferred embodiment, a method for the manufacture of an insect powder is provided, comprising a) drying insects with air having a temperature of from 135°C to 160°C; and b) grinding the insects to a powder; wherein the powder has a water activity of 0.6 or less. Thus, the invention provides an insect powder having a water activity of 0.6 or less. It is demonstrated herein that the method for the manufacture of insect powder according to the invention can produce insect flour with a_{w} values that are below 0.2. Therefore, in further preferred embodiments, the a_{w} of the insect powder is 0.5 or less, preferably 0.4 or less, more preferably 0.3 or less, most preferably 0.2 or less. Accordingly, in a preferred embodiment, a method for the manufacture of an insect powder is provided, comprising a) drying insects with air having a temperature of from 135°C to 160°C; and b) grinding the insects to a powder; wherein the powder has a water activity of 0.4 or less. Thus, the invention provides an insect powder having a water activity of 0.4 or less.

A further, related important parameter for the shelf life of food products is the overall water content in the dried insects, i.e. the residual moisture after drying and grinding of the insects into a powder. The terms "water content" and "moisture content" are used synonymously herein. A low moisture content is - as described above for the water activity - desirable to decrease the probability of mold growth during storage. The water activity and the moisture content are interdependent. Thus, as the insect powder according to the invention has a water activity of less than 0.7, it also has a residual moisture content of less than 20%. Preferably, the insect powder according to the invention has a water activity of less than 0.7 and a residual moisture content of less than 20%.

Prior art insect flour products comprise at least about 30 % water. This means that the a_{w} value is considerably above 0.7. Thus, the advantageously low water activity can also be expressed in terms of the water comprised in the insect powder. The insect powder according to the invention comprises less than 20%, preferably 19% or less, more preferably 18% or less water. In one embodiment, the insect powder comprises 20% or less water. In a particularly preferred embodiment of the invention, the insect powder comprises 18% or less water.

While steps a) and b) of the present invention may be carried out in any order, it is particularly preferred that step b) is carried out after step a). This means that step b) is preferably grinding of the dried insects. Thus, in one preferred embodiment of the invention, a method for the manufacture of insect powder is provided, comprising a) drying insects with air having a temperature of from 135°C to 160°C; and b) grinding the dried insects to a powder; wherein the powder has a water activity of 0.6 or less. A further preferred method comprises a) drying insects with air having a temperature of from 140°C to 160°C; and b) grinding the dried insects to a powder; wherein the powder has a water activity of 0.4 or less.

The a_{w} values and water contents are substantially the same in the insects before and after grinding in step b). The grinding step does not substantially influence the water content or the a_{w} value. Thus, the dried insects after step a) but before step b), and the insect powder after step b), and the insect powder according to the invention have substantially the same a_{w} value and water content. In other words, the dried insects obtained from step a) will have substantially the same a_{w} value and water content as indicated above for the insect powder.

As an effect of the drying at high temperatures in step a), the insect powder according to the invention has a particularly low germ load which results in an increased shelf life of foodstuff or feedstuff manufactured with the powder. "Germ" as used herein refers to any pathogenic microorganism (e.g. to bacteria, fungi, molds and the like). As is well known in the art, a "pathogenic" microorganism is a microorganism that can elicit any kind of disease or disorder. The term refers in particular to temperature-sensitive pathogenic microorganisms that are killed off at temperatures of from 120°C to 180°C, in particular from 140°C to 160°C. Accordingly, the insect powder is preferably substantially germ-free, such as bacteria-free and/or mold-free. Minor germ loads are, nevertheless, acceptable. Therefore, the insect powder according to the present invention comprises 10 CFU (colony forming units) / g or less, preferably 5 CFU/g of less, more preferably 1 CFU/g or less pathogenic microorganisms. In an important embodiment, the insect powder according to the invention, comprises 10 CFU/g or less *Escherichia coli* bacteria, 10 CFU/g or less coagulase-positive *Staphylococci* and 10 CFU/g or less *Bacillus cereus.* These bacteria are routinely tested for foodstuff in accordance with the German Food and Feeds Code and have been implicated in food borne illness in human consumers. In contrast to insect powder that has been obtained by freeze-drying, the insect powder of the present invention is in particular substantially free of molds. Methods for determination of the germ load are well known in the art.

The method for the manufacture of insect powder comprises further a step b) of grinding the insects to a powder.

Methods for the grinding of insects are well known in the art and can be carried out on standard kitchen appliances as well as in large scale industrial grinding devices. For example, grinding can be carried out on an impact mill with a rotor/stator system.

Grinding at a low temperature was found to be particularly advantageous for the preservation of nutrients and the good taste and smell in the insect powder. Thus, grinding will be at a temperature of below 45°C. Preferably, the grinding is carried out at a temperature of below 30°C, below 20°C, below 15°C, below 10°C, below 5°C, below 0°. In a particularly preferred embodiment, grinding in step b) is at a temperature of below 0°C.

To achieve the above described low temperatures during grinding, the insects/insect powder may be cooled during grinding. For example, cooling may be cooling with liquid nitrogen.

During grinding in step b) a particular fine particle size is achieved that renders the insect powder suitable for use as flour or coarse meal. Thus, the insect powder obtained in step b) and the insect powder according to the invention has a par-ticle size of less than or equal to 1500 µm, 1400 µm, 1300 µm, 1200 µm, 1100 µm, 1000 µm, 900 µm, 800 µm, 700 µm, 600 µm, 500 µm, 400 µm, 300 µm, 200 µm, or 150 µm. These values refer to the largest diameter of the particles. Powder with a particle size of less than 1400 µm (in particular from 1000 µm to 1400 µm) would be classified as coarse meal. Powder with a particle size of less than 200 µm (in particular from 100 µm to 200 µm) would be classified as flour. It is particularly preferred that the insect powder is insect flour or insect coarse meal. In other words, when the insect powder is insect coarse meal, it has a particle size of from 800 µm to 1600 µm, preferably from 1000 µm to 1400 µm. When the insect powder is an insect flour it has a particle size of from 50 µm to 250 µm, preferably of from 100 µm to 200 µm.

It will be understood that the above particle sizes mean that substantially all particles have the specified size. In particular at least 70%, 75%, 80%, 85%, 90%, 95% or more of the particles have the specified size. It is particularly preferred that at least 90% of the particles have the specified size. In other words, from 70% to 100%, preferably from 80% to 100%, more preferably from 90% to 100% of the particles have the indicated size.

In a particularly preferred embodiment, at least 95% of the particles in the insect powder of the invention have a particle size of less than 1400 µm. Thus, a method for the manufacture of insect powder is provided, comprising a) drying insects with air having a temperature of from 135°C to 160°C; and b) grinding the insects to a powder wherein at least 95% of the particles have a particle size of less than 1400 µm; wherein the powder has a water activity of 0.6 or less.

In another embodiment, at least 95% of the particles in the insect powder of the invention have a particle size of less than 200 µm. Thus, a method for the manufacture of insect powder is provided, comprising a) drying insects with air having a temperature of from 135°C to 160°C; and b) grinding the insects to a powder wherein at least 95% of the particles have a particle size of less than 200 µm; wherein the powder has a water activity of 0.6 or less.

Insect powder can e.g. have a fat content of about 20 to 37% or higher. As outlined elsewhere herein, the high fat content in the insect powder reduces the shelf life of the product considerably. Thus, in a preferred embodiment, the method of the invention further comprises a step c) of reducing the fat content in the powder obtained in step b). The fat content of the insect powder is preferably reduced to less than 5% (w/w). More preferably, the fat content of the insect powder is reduced to less than 2% (w/w).

Thus, in one embodiment, an insect powder is provided by the invention that has a fat content of less than 5%, less than 2%, preferably less than 1%, more preferably less than 0.5% (w/w). Accordingly, the invention provides in one embodiment an insect powder having a water activity of less than 0.7, and a fat content of less than 5 % (w/w). In a further preferred embodiment, the invention provides insect powder having a water activity of 0.6 or less and a fat content of less than 2% (w/w). In a most preferred embodiment, the invention provides insect powder having a water activity of 0.4 or less and a fat content of less than 2% (w/w).

Accordingly, the method for the manufacture of insect powder of the invention, preferably comprises a) drying insects with air having a temperature of from 100°C to 180°C; and b) grinding the insects to a powder; wherein the powder has a water activity of less than 0.7; and c) reducing the fat content in the powder obtained in step b) to a fat content of less than 5% (w/w). In a further preferred embodiment, the method comprises a) drying insects with air having a temperature of from 135°C to 160°C; and b) grinding the insects to a powder; wherein the powder has a water activity of 0.6 or less; and c) reducing the fat content in the powder obtained in step b) to a fat content of less than 2% (w/w). In a most preferred embodiment, the method comprises a) drying insects with air having a temperature of from 140°C to 160°C; and b) grinding the insects to a powder; wherein the powder has a water activity of 0.4 or less; and c) reducing the fat content in the powder obtained in step b) to a fat content of less than 2% (w/w).

Methods for the reduction of the fat content in a foodstuff or feedstuff such as the insect powder of the invention are known in the art. Any method that is suitable to reduce the fat content to the desired extend may be used in step c). It is particularly preferred that the fat content is reduced by solvent extraction or high pressure extraction. In comparison with the prior art method of pressing, these methods have the advantage that a good taste of the insect powder is achieved.

In a preferred embodiment, the fat content is reduced in step c) by solvent extraction. Thus, in a preferred embodiment a method for the manufacture of insect powder is provided, comprising a) drying insects with air having a temperature of from 135°C to 160°C; b) grinding the insects to a powder; wherein the powder has a water activity of 0.6 or less; and c) reducing the fat content in the powder obtained in step b) by solvent extraction to a fat content of less than 2% (w/w). For the solvent extraction, unpolar solvents can be used. The solvent is, thus, preferably selected from the group consisting of hexane, ethyl acetate, and the like.

Alternatively, for the high pressure extraction, compressed gas is used. The gas can be e.g. selected from the group consisting of carbon dioxide, methane, ethane, propane and the like. The gas may be in gaseous state or transferred into a liquid by high pressure. Preferably, the gas is carbon dioxide. At a pressure over 73.8 bars and appropriate temperature, carbon dioxide turns into a liquid state and is called super-critical carbon dioxide. In a particularly preferred embodiment of the method of the invention, the fat content is reduced in step c) by high pressure extraction with supercritical carbon dioxide. Thus, in a preferred embodiment a method for the manufacture of insect powder is provided, comprising a) drying insects with air having a temperature of from 135°C to 160°C; b) grinding the insects to a powder; wherein the powder has a water activity of 0.6 or less; and c) reducing the fat content in the powder obtained in step b) by high pressure extraction with supercritical carbon dioxide to a fat content of less than 2% (w/w). High pressure extraction is usually at a pressure of from 10 to 750 bar, preferably about 400 bar. Moreover, high pressure extraction is preferably at a temperature of from 5°C to 80°C, in particular 65°C. According to the method of the invention, high pressure extraction is preferably for a duration of from 1 to 4 hours, more preferably for 2.5 hours.

It will be understood that the conditions for reducing the fat content in step c) can vary depending on the condition and composition of the insect powder obtained in step b). For example, the fat content in the powder may vary depending on the insect species used in the method of the invention. The above preferred values have been established for mealworms and are, thus, particularly applicable for mealworms and similar insects. The skilled person is able to determine the best conditions for other insect species or stages by routine experimentation.

It will be understood that the insects used in the method of the invention and comprised in the insect flour are preferably edible insects. This means that the insects are not poisonous for the consumer, i.e. for humans, or animals such as mammals, birds or fish. As it is particularly preferred that the insect powder of the invention is for human consumption, the insects, in particular, are not poisonous for humans. Edible, non-poisonous insects are well known in the art. Accordingly, lists with edible insects can be found in standard textbooks or online (e.g. on the Wageningen UR (University & Research) centre homepage).

The insects are from an insect order selected from the group of *Coleoptera, Diptera, Orthoptera* and the like. Suitable insects for the preparation of flour according to the invention can e.g. be selected from the group consisting of *Tenebrio molitor, Zophobas morio,* and *Schistocerca gregaria.* In a preferred embodiment, the insects are *Tenebrio molitor.*

The insects may be in any developmental stage, such as e.g. in egg/embryo stage, larva stage, nymphal stage, pupa stage and adult stage. The terms "larva stage" and "larval stage" are used synonymously herein. Nymphal stages are regarded herein as comprised in the term "larval stages". The larval form is particularly well suited as healthy food or food supplement because larvae are easily reared on e.g. grains, have a softer exoskeleton, few parts that are not edible and are known to have a high protein content. In a particularly preferred embodiment, the insects are, thus, in larval stages. The final larval stage is also known as the prepupa stage. Thus, in one embodiment, the insects are larvae or prepupae. During larval or nymphal development, insects usually go through multiple developmental stages which are termed instars. The terms "larval stage" and "nymphal stage" comprise any larval instar and nymphal instar, respectively.

Specifically, the insects may be e.g. mealworms (also known as flour worm). In a particularly preferred embodiment, the insects are mealworms. Mealworms are the larval form of the mealworm beetle (*Tenebrio molitor*). *Tenebrio molitor* goes through the four life stages egg/embryo, larva, pupa and adult. In a particularly preferred embodiment, the insect powder according to the invention is *Tenebrio molitor* larvae powder. Thus, a method for the manufacture of Tenebrio molitor larvae powder is provided that in a preferred embodiment comprises a) drying *Tenebrio molitor* larvae with air having a temperature of from 135°C to 160°C; b) grinding the *Tenebrio molitor* larvae to a powder; wherein the powder has a water activity of 0.6 or less; and c) preferably reducing the fat content in the powder obtained in step b) to a fat content of less than 2% (w/w).

The insects for use in the method of the invention can have ambient temperature or can be frozen, such as frozen at about -4°C, about -20°C, about -80°C, or in liquid nitrogen. The insects are killed before use in the method of the present invention. Therefore the insects may e.g. be frozen before the procedure in step a) to kill the insects. In this embodiment, frozen insects may be used in step a). Nevertheless, the insects can also be killed by other means before use in the method of the invention. The insects may also be thawed and have e.g. room temperature when used in step a).

The insects for use in step a) can be further adapted to the consumption as food. This means e.g. that the non-edible parts have been removed from the insects before use in step a). The skilled person in the art is able to determine which parts of an insect are not edible. Non-edible parts include the wings, legs, poisonous parts and the like. Further, also methods for the removal of such parts are well known in the art.

Evidently, mealworms comprise neither wings nor legs nor any poisonous parts. Therefore, the mealworms can be used in the method of the invention complete, without prior removal of any parts.

Before use in step a) the insects can be cleaned. Cleaning of the insects may be by screening for dirt (e.g. by use of a sieve), blowing out, visual inspection followed by removal of dead material and impurities. Only live animals will then be used, washed and killed (e.g. by freezing) before use in the method of the invention.

In another aspect, the invention relates to the use of an insect powder of the invention or manufactured according to the invention in food and/or feed production. In other words, this aspect of the invention concerns the use of the insect powder in the production of a foodstuff or feedstuff.

It is particularly preferred that the insect powder is used as a substitute for flour and/or coarse meal which were prepared from grain and/or seeds in food production. A "substitute" as used herein is any material/substance that can replace another material/substance in a foodstuff or feedstuff without substantially changing the properties of the foodstuff or feedstuff. If anything, the substitute will only influence the properties of the foodstuff or feedstuff positively, for example by improving the taste or by enhancing the protein content. Accordingly, the invention provides a use wherein the insect powder is mixed with flour and/or coarse meal obtainable from grain and/or plant seeds in food production.

Due to the advantageous properties of the insect powder, in particular the low a_{w}-value, its properties are highly similar to those of regular grain- or seed-based flour or coarse meal. Therefore, a higher percentage of regular flour or coarse meal can be replaced with the insect powder of the invention in comparison with prior art products. For example, the insect powder is used as a substitute to replace commonly used grain-or seed-based flour and/or coarse meal to at least 10%, preferably at least 20% or more preferably to at least 30% in the production of a foodstuff. Thus, in a particularly preferred embodiment, the invention provides a use of the insect powder described herein, wherein the insect powder is used as a substitute to replace at least 30% grain- or seed-based flour or coarse meal in the production of a foodstuff. Specifically, the insect powder may be used as a substitute to replace at least 30% grain- or seed-based flour in the production of a foodstuff. In other words, the insect powder is used as a substitute to replace of from 10% to 70%, more preferably, of from 20% to 70%, most preferably of from 30% to 70% grain-or seed-based flour and/or coarse meal in the production of a foodstuff.

The invention further relates to a foodstuff or feedstuff comprising an insect powder according to the invention or manufactured according to the method of the invention. A foodstuff comprising an insect powder according to the invention or manufactured according to the method of the invention is particularly preferred.

Preferably, the insect powder has been used as a substitute for grain- or seed-based flour and/or for grain- or seed-based coarse meal in the foodstuff or feedstuff. Thus, preferably, the foodstuff or feedstuff comprises less than 90%, preferably less than 80%, more preferably less than 90% of the flour and/or coarse meal that is comprised in the foodstuff or feedstuff when it would be prepared according to traditional recipes.

The foodstuff is preferably a baked good, such as pastry and the like. For example, the foodstuff can be selected from the group consisting of bread, noodles, cake, pastry, cookies and the like.

The invention also relates to a method for the manufacture of a foodstuff comprising the use of an insect powder of the invention. In particular, the method comprises a1) manufacturing an insect powder according to the method of the invention; or a2) using/providing an insect powder according to the invention; and b) using the insect powder in the preparation of the foodstuff. In a particular embodiment, the insect powder is used as a substitute for flour and/or coarse meal in a common recipe in step b).

### EXAMPLES

The present invention is illustrated by the following examples. However, it should be understood that the invention is not limited to the specific details of these examples.

### EXAMPLE 1: Manufacture of insect flour

The aim of the following examples was the preparation of flour having an a_{w}-value ≤ 0.6 and a residual moisture of ≤ 18 %.

### EXAMPLE 1a: Manufacture of insect flour in Tefal Actifry^{®}

Insect flour was prepared from mealworms as follows in a small scale. Frozen mealworms with a weight of 45 g were dried in the Tefal Actifry^{®} (Tefal, Groupe SEB) at a temperature of 150°C according to the following protocol:

| | | | |
|---|---|---|---|
| Phase | Time (mm: ss) | Temperature [°C] | Comment |
| 1 | 04:00 | 150 | Max. power acc. to manufacturer |
| 2 | 01:30 | | Open evaporation |
| 3 | 04:00 | 150 | Max. power acc. to manufacturer |

Due to the design of the device, the lid is opened after the first phase to allow any steam to escape. After phase 3, the dried product is cooled on paper kitchen towels for 5 min. After drying the mealworms had reduced their total weight to 21.7 g.

After cooling the dried mealworms were ground in a standard electrical customary coffee grinder to a particle size of below 1400 µm, i.e. to a particle size that resembles that of coarse meal. This means that at least 90% of the particles in the flour had a size of below 1400 µm.

The water activity a_{w} was measured with the AcquaLab CX-3TE by determining the dew point of the ground material. In short, sample bowls were filled with the ground mealworm powder and inserted into the measuring device. After determining the dew point, the device automatically calculates the a_{w} value and initiates an acoustic signal. The a_{w} value and the respective temperature are shown by the device. All measurements were carried out at a temperature between 20°C and 25°C in duplicate. Further handling of the measuring device was according to the manufacturer's manual.

The a_{w} value of the final dried mealworm flour was 0.936, the degree of drying was 51.8%.

### EXAMPLE 1b: Manufacture of insect flour in ClimaPlus^{®} Combi

Insect flour was prepared from mealworms essentially as described in Example 1. Instead of a Tefal Actifry^{®}, a hot air oven of the ClimaPlus® Combi type (Rational AG) was used:

| Phase | Time (mm: ss) | Temperature [°C] | Comment |
|---|---|---|---|
| 1 | 04:00 | 150 | Max. fan speed |
| 2 | 01:30 | | Open evaporation |
| 3 | 04:00 | 150 | Max. fan speed |

Frozen mealworms with a weight of 35.4 g were evenly distributed in a GN (Gastronorm) container 1/1 with perforation, covered with a lid and dried as described above. Subsequently, the dried mealworms were cooled and ground as described above.

The a_{w} value of the final dried mealworm flour was 0.66. After drying, the sample had a weight of 13 g corresponding to a degree of drying of 63.3%. Evidently the drying procedure in the ClimaPlus® Combi dried the sample to a higher degree than the drying procedure in the Tefal Actifry^{®}performed in Example 1.

### EXAMPLE 1c: Manufacture of insect flour in ClimaPlus^{®} Combi, long drying phases

Insect flour was prepared from mealworms essentially as described in Example 2. The heating/drying phases 1 and 3 were doubled in length:

| Phase | Time (mm: ss) | Temperature [°C] | Comment |
|---|---|---|---|
| 1 | 08:00 | 150 | Max. fan speed |
| 2 | 01:30 | | Open evaporation |
| 3 | 08:00 | 150 | Max. fan speed |

Frozen mealworms with a weight of 50.1 g were evenly distributed in a GN (Gastronorm) container 1/1 with perforation, covered with a lid and dried as described above.

Subsequently, the mealworms were cooled and ground as described above.

The a_{w} value of the final dried mealworm flour was 0.13. After drying, the sample had a weight of 16.6 g corresponding to a degree of drying of 66.8%. Evidently the drying procedure in the ClimaPlus® Combi with longer drying times dried the sample to a higher degree as drying in Example 2.

### EXAMPLE 1d: Manufacture of insect flour in ClimaPlus^{®} Combi, long drying phases, larger scale

Insect flour was prepared from mealworms essentially as described in Example 3. The mealworm sample volume was increased to 484.4 g. The mealworms were evenly distributed in two GN (Gastronorm) containers 1/1 with perforation, covered with a lid and dried as described above and as follows. The filling height was about 0.8 to 1.0 cm (fresh product).

| Phase | Time (mm: ss) | Temperature [°C] | Comment |
|---|---|---|---|
| 1 | 08:00 | 150 | Max. fan speed |
| 2 | 01:30 | | Open evaporation |
| 3 | 08:00 | 150 | Max. fan speed |
| 4 | 04:00 | 150 | Max. fan speed |

The mealworms were not uniformly dried after phase 3, degree of drying was 61.65%. Therefore, an additional drying step 4 was added in which the mealworms were dried for an additional 4 min.

Other than in the previous experiments, the sample was shred in a Thermomix kitchen aid (Vorwerk) for 10 sec on level 9 (about 10,000 rpm according to the manufacturer's (Vorwerk) data sheet).

The a_{w} value of the final dried mealworm flour was between 0.26 and 0.31. The sample had a weight of 164.3 g corresponding to a degree of drying of 66.09%. The residual moisture content was below 18%.

Further, a nutritional analysis according to § 64 LFGB (German Lebensmittel- und Futtermittelgesetzbuch, i.e. the Food and Feed Code) was carried out. The results are shown in the below table.

| **Parameter** | **Unit** | **Result** |
|---|---|---|
| Protein N x 6.25 (L 06.00-7) | g/100g | 64.3 |
| Fat (L 06.00-6) | g/100g | 19.6 |
| Carbohydrates, calculated | g/100g | 8.2 |
| Water (L 06.00-3) | g/100g | 3.2 |
| Ash (L 06.00-4) | g/100g | 4.7 |
| Caloric value | kJ/100g | 1958 |
| Caloric value, kcal | Kcal/100g | 466 |

### Results - general

It was found that insect flour with good a_{w} values and high degrees of drying could be prepared by drying mealworms in Tefal Actifry^{®} as well as the hot air oven of the ClimaPlus^{®} Combi type. The drying procedure in the latter device gave superior results, i.e. a higher degree of drying as well as lower a_{w} values.

### EXAMPLE 2: Decreasing the fat content in the flour

The insect powder manufactured in Example 1d initially comprised 19.6 g/100g fat. The fat content in the insect flour was decreased by high pressure extraction with super-critical carbon dioxide at 400 bar, 65°C for about 2.5 hours. The final product had a fat content of 1.4 g/100g.

Advantageously, the reduction in the fat content of the insect powder also led to an increase in the protein content as can be seen from the below table.

Protein content in comparison [g/100 q flour]:

| Conventional wheat flour type 405 | mealworm non-defatted flour according to the invention | mealworm defatted flour according to the invention |
|---|---|---|
| 10,0 g | 64,3 g | 77,8 g |

### EXAMPLE 3: Preparation of food with insect flour

The insect flour manufactured in Example 1d was used in the preparation of bread and noodles. Apart from the use of insect flour, both food products were manufactured according to conventional recipes as described below.

The insect flour was not degreased as described in the above examples. The flour had a residual moisture content of <= 18% and an a_{w} value of 0.6. The particle size was less than 200 µm.

### Baguette

The classical recipe for baguette is a mixture of the following ingredients: 1 kg wheat flour type 405, 2 pck. dry yeast, 6 tablespoons olive oil, 1 tablespoon salt, 500 ml lukewarm water, and 1 egg.

For the preparation of an insect flour-based baguette 1 kg wheat flour was replaced by 700 g wheat flour type 405 and 300 g mealworm flour.

Both components were knead with the dry yeast, salt, olive oil and water into a dough. The dough was then placed in the oven at about 50 degrees Celsius (convection) to allow it to rise for half an hour. After rising, the dough was divided into 4 parts, rolled out on a lightly floured work surface and rolled into baguettes. Before baking the baguettes were brushed with whisked egg. The loaves were then baked in the oven at 200 degrees Celsius (convection) for 20 minutes.

### Noodles

The classical recipe for noodles is a mixture of the following ingredients: 4 egg yolks, 1 egg, 2 tablespoons olive oil, salt and 400 g wheat flour type 405.

For the preparation of insect flour-based noodles, 400 g wheat flour type 405 was replaced by 280 g wheat flour type 405 and 120 g mealworm flour.

To prepare the noodles, the flour was placed on the work surface. In the middle of the flour a small depression was formed into which the eggs were placed and salt and oil were added. Then, the ingredients, including the flour, were mixed using a fork. Once the mass had reached a malleable consistency, the mass was kneaded on the floured work surface. The dough was kneaded until it was elastic, had a shiny surface and stuck no longer.

Subsequently, the dough was formed into a ball, and wrapped in cling film. He was allowed to rest for about 30 minutes at room temperature.

For further processing, the pasta dough was then rolled and processed into different types of pasta using a pasta machine.

### Results

In comparison with standard formulations, the baguettes and pasta made with flour according to the invention had essentially the same properties. During a tasting with experienced assessors no significant sensory differences were detected. In particular, the baguettes and pasta prepared with the insect flour according to the invention showed the same firm texture and juiciness and a similar mouth feel. The taste of the insect flour-based product deviated slightly from that of the products that were prepared according to standard recipes. The assessors detected a slightly nutty flavor, which was consistently described as very pleasant. Visually, the insect flour-based products also differed only slightly in having a slightly brownish color. As the coloration was reminiscent of the use of whole grain flours, it was generally regarded as rather agreeable.

The above results show that the flour and/or meal of the present invention, that is prepared from edible insects, can be used as a replacement for conventionally used flours and coarse meal without reducing the technological product quality. Additionally, the insect flour-based products have nutritional advantages as they have considerably increased protein contents.

### EXAMPLE 4: Analysis of germ load

Freeze-dried grasshoppers and freeze-dried mealworms were purchased and analyzed for their germ content in accordance with § 64 LFGB (German Lebensmittel- und Futtermittelgesetzbuch, i.e. the German Food and Feeds Code). It was found that the freeze-dried grasshoppers as well as the mealworms comprised less than 10 CFU *E.coli* and coagulase-positive staphylococcus and tested negative for salmonella. The grasshoppers comprised 1x10⁴ CFU presumptive *Bacillus cereusk,* while the mealworms comprised less than 10 CFU. Moreover, a considerable mold-load was detected in both freeze-dried preparations. The grasshoppers/mealworms were analyzed on plates for microbiological analyses and the plates were overgrown by molds in several dilution steps.

In contrast, the insect powder generated in Example 1 was substantially free of mold. No mold growth was detected when the powder was tested on plates for microbiological analyses.

## Claims

1. Method for the manufacture of insect powder, comprising
a) drying insects with air having a temperature of from 100°C to 180°C; and
b) grinding the insects to a powder;
wherein the powder has a water activity of less than 0.7.

2. Method according to claim 1, wherein the method further comprises c) reducing the fat content in the powder obtained in step b) to less than 5% (w/w), preferably to a fat content of less than 2% (w/w).

3. Method according to any of claims 1 to 2, wherein drying in step a) is in a drying chamber and evaporated moisture is removed from the drying chamber at least once during step a).

4. Method according to any of claims 1 to 3, wherein the drying is drying with air having a temperature of from 135°C to 160°C.

5. Method according to any of claims 1 to 4, wherein the insects are larvae or prepupae.

6. Method according to any of claims 1 to 5, wherein the insects are from an insect order selected from the group of Coleoptera, Diptera, and Orthoptera, wherein the insects are preferably *Tenebrio molitor* larvae.

7. Method according to any of claims 1 to 6, wherein at least 95% of the particles in the powder have a particle size of less than 1400 µm, preferably of less than 200 µm.

8. Insect powder obtainable by a method of any of claims 1 to 7.

9. Insect powder having a water activity of less than 0.7.

10. Insect powder according to claim 8 or 9, having a fat content of less than 2 % (w/w).

11. Insect powder according to any of claims 8 to 10, wherein the insect powder has a water activity of 0.4 or less.

12. Insect powder according to any of claims 8 to 11, comprising 10 CFU/g or less *Escherichia coli* bacteria, 10 CFU/g or less coagulase-positive *Staphylococci* and 10 CFU/g or less *Bacillus cereus.*

13. Insect powder according to any of claims 8 to 12, wherein the powder was prepared from *Tenebrio molitor* larvae.

14. Use of an insect powder according to any of claims 8 to 13 or obtainable by a method according to any of claims 1 to 7 for the production of food, wherein the insect powder is used as a substitute to replace at least 30% grain- or seed-based flour or grain- or seed-based coarse meal in the production of a foodstuff.

15. Foodstuff, comprising an insect powder according to any of claims 8 to 13 or obtainable by a method according to any of claims 1 to 7.
